# EUROPÄISCHE PATENTSCHRIFT

(11) **EP 0 890 408 B1**
(45) Veröffentlichungstag und Bekanntmachung des Hinweises auf die Patenterteilung: **04.06.2003**
(21) Anmeldenummer: 98112033.0
(22) Anmeldetag: 30.06.1998
(51) Int. Cl.: B23K 11/02

(54) **Verfahren zur Herstellung von Schweissverbindungen sowie nach dem Verfahren gefertigte Baugruppe**
Welding connection manufacturing method and manufactured object
Méthode de fabrication d'une liaison soudée et objet ainsi fabriqué

(30) Priorität: 08.07.1997 DE 19729094
(43) Veröffentlichungstag der Anmeldung: 13.01.1999
(73) Patentinhaber: Zehnder Verkaufs- und Verwaltungs AG, 5722 Gränichen (CH)
(72) Erfinder: Kriese, Peter, 77948 Friesenheim (DE)
(74) Vertreter: Stenger, Watzke & Ring Patentanwälte

(56) Entgegenhaltungen:
- DE-U- 7 128 392
- FR-A- 2 648 067
- PATENT ABSTRACTS OF JAPAN vol. 10, no. 96 (M-469) [2153], 12. April 1986 & JP 60 231575 A (TOSHIBA K.K.), 18. November 1985

## Beschreibung

Die vorliegende Erfindung betrifft ein Verfahren zur Herstellung von Schweißverbindungen zwischen im wesentlichen metallischen Elementen unter Anwendung eines Widerstands-Schweißverfahrens.

Unterschiedlichste Schweißverfahren für unterschiedlichste Zwecke sind im Stand der Technik gemeinhin bekannt. Insbesondere sind unterschiedlichste Schweißverfahren für die Verbindung von Formstücken, Rohren und dergleichen bekannt. Diese werden unter anderem angewandt bei der Herstellung von Heizelementen, Wärmetauschern und dergleichen.

Ein wichtiges Anwendungsgebiet der Erfindung ist die stirnkantenseitige Verbindung von Rohren oder Formstücken. Die Erfindung läßt sich jedoch auch auf andere Gebiete anwenden.

Bei der stirnkantenseitigen Verbindung von Rohren werden diese einander verlängernd aneinandergelegt und über den gesamten Umfang mit einer Schweißnaht verbunden. Dabei ist es bekannt, daß sich, im wesentlichen unabhängig vom angewandten Schweißverfahren, ein Grat bildet, der in nachfolgenden Arbeitsgängen beispielsweise durch Abstanzen, Abschleifen oder dergleichen entfernt werden muß. Dies trifft auch für den Fall des Widerstandsschweißens zu, wo die Rohre Stirnkante an Stirnkante kontaktiert und aufeinander zu gepreßt werden, während die entsprechende Spannung angelegt wird.

In der DE-U-71 28392 wird ein Preßbackenpaar mit Scherenmessern, welche gegen die noch nicht abgekühlten Schweißnahtparte einwirken verwendet. Dadurch wird die Schweißnaht entgratet.

Ausgehend von diesem Stand der Technik liegt der vorliegenden Erfindung die **Aufgabe** zugrunde, ein Verfahren zur Herstellung von Schweißverbindungen dahingehend zu verbessern, daß eine Gratbildung während des Schweißvorgangs verhindert werden kann. Darüber hinaus sollen weitestgehend Schweißspritzer vermieden und der beim Schweißen übliche Schmutzanfall, beispielsweise durch Abbrand, verringert werden.

Verfahrensseitig wird zur technischen Lösung dieser Aufgabe vorgeschlagen, ein Verfahren gemäβ Anspruch 1.

Durch das erfindungsgemäße Verfahren wird im Falle des Verbindens durch Widerstandsschweißen der zu verschweißende Kontaktbereich zumindest da abgedeckt, wo er gratfrei entstehen soll. Die Elemente werden im Verbindungsbereich miteinander kontaktiert. Die Festlegung der zu verschweißenden Elemente erfolgt in üblicher Weise. Zum Zwecke der Herstellung der Schweißverbindung mittels Widerstandsschweißen wird dann der Kontaktbereich abgedeckt. Darunter ist zu verstehen, daß das Kapselelement beide zu verbindenden Elemente bis an die Verbindungsstelle heran kontaktiert, also auf die Elemente aufgelegt, aufgedrückt oder sonstwie an diese herangebracht und während des Schweißvorganges gehalten wird. Die Abdeckung erfolgt oberflächenbündig, das heißt, das Kapselelement hat eine zu den Oberflächen der zu verbindenden Elemente im Kontaktbereich komplementäre Ausnehmungen und kann somit die gesamten Oberflächen im Kontaktbereich berührend bündig aufgelegt werden.

Im Falle, daß runde Elemente stirnkantenverschweißt werden, wird gemäß einem besonders vorteilhaften Vorschlag der Erfindung der Kontaktbereich manschettenartig ummantelt.

Es hat sich überraschend herausgestellt, daß die Abdeckung bzw. Ummantelung des Kontaktbereiches während des Schweißvorganges zu einer im wesentlichen oberflächenbündigen, gratfreien Schweißstelle führt. Darüber hinaus werden Schweißspritzer nahezu vollständig vermieden und der Schmutzanfall erheblich verringert.

Gemäß einem besonders vorteilhaften Vorschlag der Erfindung wird ein Kapselelement mit Keramikbestandteilen verwendet, in besonders vorteilhafter Weise ein Keramikformelement. Dieses kann gemäß einem Vorschlag der Erfindung in ein Trägerelement eingebettet sein, welches seinerseits Befestigungselemente zur Anordnung im Schweißstellenbereich aufweist oder durch diese an der gewünschten Stelle fixierbar ist.

In vorteilhafter Weise ist das Kapselelement mehrteilig und kann so beispielsweise auch runde zu verschweißende Elemente umgebend im Schweißstellenbereich angeordnet werden. Dazu kann es zweiteilig oder vierteilig sein. Es kann im Trägerelement eingebettet, eingegossen, eingeklebt oder sonstwie mit diesem verbunden sein. Auch kann das Trägerelement als äußere Erweiterung des Kapselelementes angefügt sein.

Gemäß einem weiteren Vorschlag der Erfindung wird ein Kapselelement mit einer Wärmeableitung verwendet. Diese kann eine beispielsweise wunschgemäß einsetzbare und steuerbare Wärmeableitung sein, die zum Beispiel direkt nach dem Schweißvorgang zum Tragen gebracht werden kann.

Mit der Erfindung ergeben sich durch die Anwendung des erfindungsgemäßen Verfahren auch Baugruppen, bestehend aus wenigstens zwei metallischen Elementen, welche durch Widerstandsschweißen miteinander verbunden sind, und die gekennzeichnet sind durch eine schweißgratfreie Schweißverbindungsstelle.

Derartige nach dem erfindungsgemäßen Verfahren hergestellte Baugruppen und brauchen jedenfalls nicht mehr zu Zwecken der Schweißgratentfernung nachbearbeitet zu werden. Eine einfache Glättung zu Zwecken der optischen Verbesserung wird dadurch nicht ausgeschlossen. Die Baugruppe ist somit einfacher und wirtschaftlicher herstellbar.

In vorteilhafter Weise besteht die Baugruppe aus zwei stirnkantenseitigen miteinander verbundenen Rohrstücken, die insbesondere bei der Herstellung von Wärmetauschern, Heizkörpern und dergleichen wirtschaftlich herstellbar sind.

Das erfindungsgemäße Verfahren ist insbesondere zur Verbesserung der Wirtschaftlichkeit und Vereinfachung der Steuerung industrieller Fertigungsverfahren einsetzbar und erhöht den Automatisierungsgrad.

Das Verfahren ist einfach anwendbar und führt zu einer Reduzierung des arbeitstechnischen und wirtschaftlichen Aufwandes.

Weitere Vorteile und Merkmale der Erfindung ergeben sich aus der folgenden Beschreibung anhand der Figuren. Dabei zeigen:
- Fig. 1: eine schematische Darstellung zweier zu verbindender Rohre;
- Fig. 2: eine Schnittdarstellung eines Ausführungsbeispiels für ein Kapselelement und
- Fig. 3: eine teilgeschnittene Darstellung eines Ausführungsbeispiels für eine Anordnung an der Schweißstelle während des Schweißvorganges.

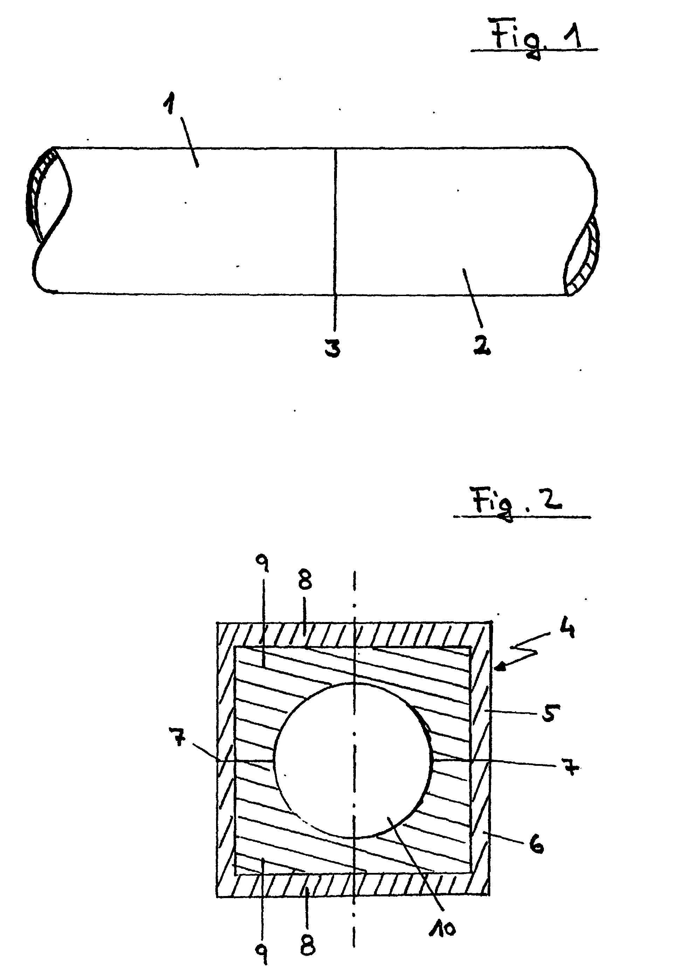

Gemäß Fig. 1 sollen die beiden Rohre 1 und 2 im Bereich der Verbindungsstelle 3 miteinander verschweißt werden. Zu diesem Zweck sind die Rohre 1 und 2 Stirnkante auf Stirnkante miteinander in Kontakt gebracht.

Fig. 2 zeigt eine Schnittdarstellung durch ein Ausführungsbeispiel für ein erfindungsgemäßes Abdeckelement 4. Dieses besteht im gezeigten Ausführungsbeispiel aus einer oberen Hälfte 5 und einer unteren Hälfte 6, die jeweils entlang der mittleren Trennstelle 7 miteinander verbindbar sind. Zum Zusammenhalten sind nicht gezeigte Klemm- bzw. Verbindungselemente zu verwenden.

Jede der Hälften 5 und 6 besteht aus einem kastenartigen Rahmen 8, in welchen das Kapselelement 9 aus feuerfestem, temperaturbeständigem Werkstoff eingesetzt ist. Es handelt sich beispielsweise um Keramik. Auch können keramikhaltige oder sonstige feuerfeste, temperaturbeständige Werkstoffe in Frage kommen.

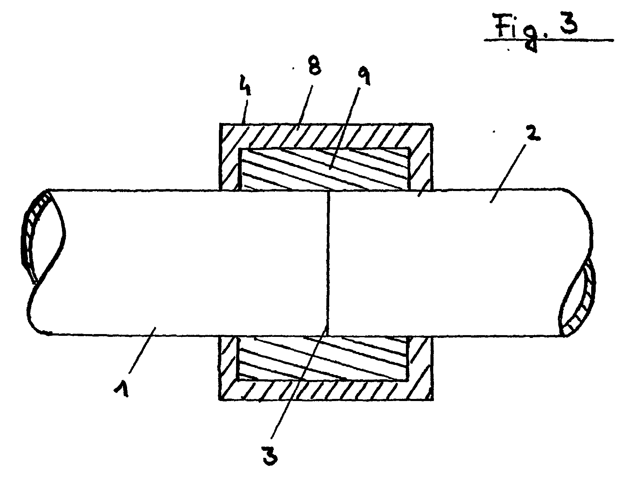

Fig. 3 zeigt die Montageanordnung während des Schweißvorganges. Die Rohre 1 und 2 sind im Bereich der Verbindungsstelle 3 miteinander stirnkantenseitig kontaktiert und werden durch nicht gezeigte Mittel in üblicher Weise in dieser Position gehalten. Das aus Kapselelement 9, beispielsweise aus Keramik, und Rahmenelement 8 bestehende Abdeckelement 4 ist im Bereich der Verbindungsstelle 3 die beiden Rohre ummantelnd angeordnet. Somit kann eine schweißgratfreie Verbindungsstelle im Rahmen eines Widerstands-Schweißverfahrens erstellt werden.

Die beschriebenen Ausführungsbeispiele dienen der Erläuterung und sind nicht beschränkt.

### Bezugszeichenliste

- 1: Rohr
- 2: Rohr
- 3: Verbindungsstelle
- 4: Abdeckelement
- 5: Hälfte
- 6: Hälfte
- 7: Trennstelle
- 8: Rahmenelement
- 9: Kapselelement

## Patentansprüche

1. Verfahren zur Herstellung von Schweißverbindungen zwischen metallischen Elementen durch widerstandsschweißen, wobei zum Zwecke der Herstellung einer Schweißverbindung mittels Widerstandssweißen die Elemente (1, 2) in einem zu verschweißenden Kontaktbereich (3) durch ein Kapselelement (9) aus feuerfestem, temperaturbeständigem Werkstoff derart abgedeckt werden, wobei das Kapselelement (9) beide zu verbindenden Elemente (1,2) oberflächenbündig kontaktiert und während des Schweißvorganges dort verbleibt.

2. Verfahren nach Anspruch 1, wobei bei der verfahrensgemäßen Stimkantenverschweißung runder Elemente (1, 2) die Schweißstelle (3) manschettenartig ummantelt wird.

3. Verfahren nach einem der vorhergehenden Ansprüche, **dadurch gekennzeichnet, daß** ein aus Keramikbestandteilen bestehendes Kapselelement (9) verwendet wird.

4. Verfahren nach einem der vorhergehenden Ansprüche, **dadurch gekennzeichnet, daß** ein Keramikformelement als Kapselelement (9) verwendet wird.

5. Verfahren nach einem der vorhergehenden Ansprüche, **dadurch gekennzeichnet, daß** ein in einem rahmenartigen Trägerelement (8) angeordnetes Kapselelement (9) verwendet wird.

6. Verfahren nach einem der vorhergehenden Ansprüche, **dadurch gekennzeichnet, daß** ein mehrteiliges Kapselelement (9) verwendet wird.

7. Verfahren nach einem der vorhergehenden Ansprüche, **dadurch gekennzeichnet, daß** Wärme abgeleitet wird.

## Claims

1. Method for producing welded joints between metallic elements through resistance welding, wherein, for the purpose of producing a welded joint by means of resistance welding, the elements (1, 2) are covered in a contact region (3), which is to be welded, by a casing element (9) of a refractory, temperature-resistant material, wherein the casing element (9) contacts both elements (1, 2) to be joined flush with the surface and remains there during the welding operation.

2. Method according to Claim 1, wherein, when welding the end edges of round elements (1, 2) according to the method, the welding point (3) is encased in the manner of a sleeve.

3. Method according to either of the preceding Claims, **characterised in that** a casing element (9) consisting of ceramic components is used.

4. Method according to any one of the preceding Claims, **characterised in that** a ceramic moulded element is used as the casing element (9).

5. Method according to any one of the preceding Claims, **characterised in that** a casing element (9) disposed in a frame-like carrier element (8) is used.

6. Method according to any one of the preceding Claims, **characterised in that** a multi-part casing element (9) is used.

7. Method according to any one of the preceding Claims, **characterised in that** heat is dissipated.

## Revendications

1. Procédé destiné à la réalisation de liaisons soudées entre des éléments métalliques par soudage par résistance, dans le but de la réalisation d'une liaison soudée au moyen de soudage par résistance, les éléments. (1, 2) étant recouverts dans une zone de contact (3) à souder par un élément d'encapsulage (9) en matériau réfractaire résistant aux hautes températures, l'élément d'encapsulage (9) étant en contact à surface affleurée avec les deux éléments (1, 2) à relier, et restant à ce niveau pendant le processus de soudage.

2. Procédé suivant la revendication 1, dans lequel l'emplacement de soudure (3) est enrobé en forme de manchette lors du soudage, selon le procédé, d'arêtes frontales d'éléments ronds (1, 2).

3. Procédé selon l'une des revendications précédentes, **caractérisé en ce qu'**il est utilisé un élément d'encapsulage (9) constitué de composés céramiques.

4. Procédé selon l'une quelconque des revendications précédentes, **caractérisé en ce qu'**il est utilisé un élément moulé en céramique en tant qu'élément d'encapsulage (9).

5. Procédé selon l'une quelconque des revendications précédentes, **caractérisé en ce qu'**il est utilisé un élément d'encapsulage (9) disposé dans un élément de support (8) de type cadre.

6. Procédé selon l'une quelconque des revendications précédentes, **caractérisé en ce qu'**il est utilisé un élément d'encapsulage (9) en plusieurs parties.

7. Procédé selon l'une quelconque des revendications précédentes, **caractérisé en ce que** de la chaleur est dissipée.
